# EUROPEAN PATENT APPLICATION

(11) **EP 4 354 023 A1**
(43) Date of publication of application: **17.04.2024**
(21) Application number: 22820032.5
(22) Date of filing: 23.05.2022
(51) Int. Cl.: F24C 15/10, C03C 17/32, H05B 6/12

(54) **COOKER TOP PLATE**

(30) Priority: 07.06.2021 JP 2021095127
(71) Applicant: Nippon Electric Glass Co., Ltd., Otsu-shi, Shiga 520-8639 (JP)
(72) Inventor: YAMAMOTO, Takefumi, Otsu-shi, Shiga 520-8639 (JP); YOKOYAMA, Shohei, Otsu-shi, Shiga 520-8639 (JP)
(74) Representative: Tetzner, Michael
(86) International application number: PCT/JP2022/021137
(87) International publication number: WO 2022/259850

(57) **Abstract**

Provided is a top plate for a cooking device capable of effectively improving scratch resistance. A top plate for a cooking device 1 including: a glass substrate 2 including a cooking surface 2a on which a cooking implement is to be placed, and a back surface 2b on an opposite side to the cooking surface 2a; and a heat-resistant resin layer 3 provided on the back surface 2b of the glass substrate 2; the heat-resistant resin layer 3 containing a silicone resin and a needle-like crystal pigment.

## Description

### Technical Field

The present invention relates to a top plate for a cooking device.

### Background Art

For a top plate for a cooking device such as an induction cooker, a radiant heater cooker, and a gas cooker, a glass substrate having heat resistance, which includes a crystallized glass substrate, borosilicate glass, or the like with a low thermal expansion coefficient is used. Such a glass substrate of a top plate for a cooking device includes a cooking surface and a back surface located inside of the cooking device.

A back surface of a glass substrate of a top plate for a cooking device may be provided with a heat-resistant resin layer containing a silicone resin for a purpose of concealing a structure inside the cooking device and improving heat resistance.

For example, Patent Document 1 below describes a top plate for a cooking device including a transparent crystallized glass plate, and a decorative layer formed on a face that is facing an electromagnetic heating device of the transparent crystallized glass plate, the decorative layer being obtained by mixing a silicone resin and an inorganic pigment. Patent Document 1 describes that a molar ratio of an organic group to Si (organic group/Si) in the silicone resin is from 0.1 to 1.5.

Furthermore, Patent Document 2 below describes a top plate for a cooking device including a glass plate and a heat-resistant resin layer provided in contact with a back surface of the glass plate. It is described that the heat-resistant resin layer includes a heat-resistant resin having heat resistance, a plate having a Mohs' hardness of 3 or greater, and inorganic fillers in a flake-like form such as a scale form.

### Citation List

### Patent Literature

Patent Document 1: JP 2005-298266 A
Patent Document 2: JP 2020-094799 A

### Summary of Invention

### Technical Problem

A top plate for a cooking device may be scratched during the delivery process when the top plate is assembled into a cooking device or when the top plate for a cooking device is brought into contact with peripheral components. Thus, enhancement in scratch resistance has been demanded for a heat-resistant resin layer provided in a top plate for a cooking device.

However, similarly to Patent Document 1, in a case where crosslinking density is increased by increasing an amount of functional groups in a resin, cracking or fracture may happen in the heat-resistant resin layer. Furthermore, similarly to Patent Document 2, in a case where a scale-like pigment or the like is used as a pigment, adhesiveness may deteriorate depending on the storage conditions, and surface layer peeling may occur in the heat-resistant resin layer. Thus, there is an issue in that adequate improvement in scratch resistance of the top plate for a cooking device is difficult.

An object of the present invention is to provide a top plate for a cooking device that can effectively improve scratch resistance.

### Solution to Problem

A top plate for a cooking device according to the present invention includes: a glass substrate including a cooking surface on which a cooking implement is to be placed, and a back surface on an opposite side to the cooking surface; and a heat-resistant resin layer provided on the back surface of the glass substrate, the heat-resistant resin layer containing a silicone resin and a needle-like crystal pigment.

In the present invention, the needle-like crystal pigment is preferably at least one selected from the group consisting of potassium titanate, calcium silicate, and titanium oxide. The needle-like crystal pigment is more preferably potassium titanate.

In the present invention, the heat-resistant resin layer preferably further contains a scale-like pigment. The scale-like pigment is more preferably mica or aluminum.

In the present invention, a pigment mass concentration of the needle-like crystal pigment in the heat-resistant resin layer is preferably 3% or greater and 50% or less.

In the present invention, the heat-resistant resin layer preferably includes a first layer containing a first color pigment, and a second layer provided on the first layer, the second layer containing a second color pigment that is different from the first color pigment, and at least one of the first layer or the second layer contains the needle-like crystal pigment. The second layer more preferably contains the needle-like crystal pigment.

### Advantageous Effects of Invention

According to the present invention, a top plate for a cooking device that can effectively improve scratch resistance can be provided.

### Brief Description of Drawings

FIG. 1 is a schematic cross-sectional view illustrating a top plate for a cooking device according to a first embodiment of the present invention.
FIG. 2 is a schematic cross-sectional view illustrating a top plate for a cooking device according to a second embodiment of the present invention.
FIG. 3 is a schematic cross-sectional view illustrating a top plate for a cooking device according to a third embodiment of the present invention.
FIG. 4 is a scanning electron microscope photograph of a cross-section of a heat-resistant resin layer obtained in Example 1.

### Description of Embodiments

A preferred embodiment is described below. However, the following embodiment is merely an example, and the present invention is not limited to the following embodiment. In each of the drawings, members having substantially the same function may be denoted by the same reference sign.

### First Embodiment

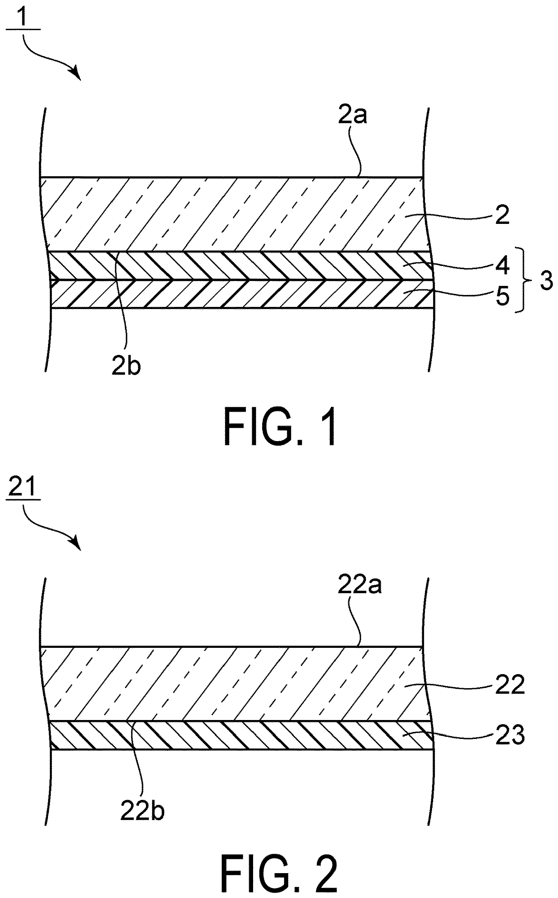

FIG. 1 is a schematic cross-sectional view illustrating a top plate for a cooking device according to a first embodiment of the present invention. As illustrated in FIG. 1, a top plate for a cooking device 1 (hereinafter, "top plate for a cooking device" is simply referred to as "top plate") includes a glass substrate 2. The glass substrate 2 includes a cooking surface 2a and a back surface 2b facing each other. The cooking surface 2a is a surface on which cookware such as a pot and a frying pan is to be placed. The back surface 2b is a surface facing a light source and a heating device in an inner side of the cooking device. Therefore, the cooking surface 2a and the back surface 2b are a front side and a back side, respectively.

A heat-resistant resin layer 3 is provided on the back surface 2b of the glass substrate 2. In the present embodiment, the heat-resistant resin layer 3 includes a first layer 4 and a second layer 5. More specifically, the first layer 4 is layered on the back surface 2b of the glass substrate 2, and the second layer 5 is layered thereon. In the present embodiment, the first layer 4 and the second layer 5 each contain a silicone resin and a needle-like crystal pigment.

Because the top plate for a cooking device 1 of the present embodiment has the configuration described above, scratch resistance can be effectively improved.

In a top plate in related art, a scratch may be caused during the transportation process when the top plate is assembled into a cooking device or when the top plate is brought into contact with peripheral components. Thus, enhancement in scratch resistance has been demanded for a heat-resistant resin layer provided in a top plate.

As a method to improve the scratch resistance, for example, a method of enhancing crosslink density by increasing a functional group amount of a resin is considered; however, in this case, cracking or fracture may be caused in the heat-resistant resin layer. It is conceived that this is because, when the functional group amount is increased excessively, cracking or fracture tends to be caused in the heat-resistant resin layer due to volume shrinkage involved with reaction.

Furthermore, when it is attempted to enhance the scratch resistance by increasing a pigment proportion in the heat-resistant resin layer, a resin amount in the heat-resistant resin layer becomes relatively smaller, and thus adhesive strength may decrease or brittleness may be caused.

Furthermore, when it is attempted to enhance the scratch resistance by using a scale-like pigment as a pigment, adhesiveness may deteriorate depending on the storage conditions, and surface layer peeling may occur in the heat-resistant resin layer. In particular, when the top plate is brought into contact with water or boiling water, this tendency is significant. It is conceived that this is because the scale-like pigment is oriented in a direction parallel to the heat-resistant resin layer in the heat-resistant resin layer, and thus, although resistance for shrinking force in the direction parallel to the heat-resistant resin layer is enhanced, cohesive force tends to decrease for the shrinking force in a perpendicular direction.

Meanwhile, the inventors of the present invention focused on a pigment contained in a heat-resistant resin layer of a top plate for a cooking device, and found that the scratch resistance of the top plate can be effectively enhanced by using a needle-like crystal pigment as the pigment contained in the heat-resistant resin layer.

The reason for this is not clear; however, it is conceived that, in a case where a needle-like crystal pigment is used, entanglement of pigments functions as a backbone material, thus volume shrinkage of a silicone resin is suppressed, occurrence of fracture or cracking of the heat-resistant resin layer due to the volume shrinkage of the silicone resin is suppressed, and strength at break is increased. Furthermore, it is conceived that, unlike pigments such as scale-like pigments, no orientation in a specific direction occurs, and thus surface layer peeling is less likely to occur.

Each layer constituting the top plate 1 will be described in detail below.

### Glass Substrate

The glass substrate 2 transmits at least some light at wavelengths from 450 nm to 700 nm. The glass substrate 2 may be colored and transparent, yet is preferably colorless and transparent from the viewpoint of further enhancing aesthetic properties of the top plate 1. Note that, in the present specification, "transparent" refers to a light transmittance of 70% or greater in a visible wavelength range from 450 nm to 700 nm.

In the top plate 1, heating and cooling are repeated. Thus, the glass substrate 2 preferably has a high heat resistance and a low thermal expansion coefficient. Specifically, a softening temperature of the glass substrate 2 is preferably 700°C or higher, and more preferably 750°C or higher. Furthermore, an average linear thermal expansion coefficient from 30°C to 750°C of the glass substrate 2 is preferably in a range of -10 × 10⁻⁷/°C to +60 × 10⁻⁷/°C, more preferably in a range of -10 × 10⁻⁷/°C to +50 × 10⁻⁷/°C, and even more preferably in a range of -10 × 10⁻⁷/°C to +40 × 10⁻⁷/°C. Therefore, the glass substrate 2 is preferably made of low-expansion glass having a high glass transition temperature, or low-expansion crystallized glass. Specific examples of low-expansion crystallized glass include "N-0" available from Nippon Electric Glass Co., Ltd. Note that, as the glass substrate 2, borosilicate glass or the like may be used.

A thickness of the glass substrate 2 is not particularly limited. The thickness of the glass substrate 2 may be set as appropriate in accordance with light transmittance or the like. The thickness of the glass substrate 2 may be, for example, approximately from 2 mm to 6 mm.

### Heat-Resistant Resin Layer

In a case where a pigment is contained, the heat-resistant resin layer 3 preferably includes a first layer 4 and a second layer 5 provided on the first layer 4. When the heat-resistant resin layer 3 includes two layers, the content of the pigment as the heat-resistant resin layer 3 can be maintained or increased even when pigment proportions in the first layer 4 and the second layer 5 are reduced to prevent reduction in adhesive strength of the glass substrate 2 and the heat-resistant resin layer 3, and thus concealing properties for an inner structure of the cooking device can be further enhanced. Furthermore, the first layer 4 and the second layer 5 are preferably colored in different colors. For example, the first layer 4 may be a white coating, and the second layer 5 may be a gray coating. However, the colors of the first layer 4 and the second layer 5 are not particularly limited and can be appropriately selected taking design and concealing properties for an inner structure of the cooking device into consideration. Furthermore, the heat-resistant resin layer 3 may have three or more layers.

Each of the first layer 4 and the second layer 5 contains a silicone resin and a needle-like crystal pigment. Note that, in the present invention, at least one of the first layer 4 or the second layer 5 is only required to contain a needle-like crystal pigment. However, from the viewpoint of further effectively improving the scratch resistance of the top plate 1, the second layer 5 preferably contains a needle-like crystal pigment, and from the viewpoint of effectively suppressing occurrence of fracture or cracking of the heat-resistant resin layer 3 due to volume shrinkage of the silicone resin, the first layer 4 preferably contains a needle-like crystal pigment. Note that, more preferably, the first layer 4 and the second layer 5 each contains a needle-like crystal pigment.

The silicone resin is not particularly limited but is preferably a silicone resin having a high heat resistance. For example, the silicone resin is preferably a silicone resin in which a functional group directly bonded to a silicon atom is at least one of a methyl group or a phenyl group. In this case, change of color of the heat-resistant resin layer 3 when the top plate 1 reaches a high temperature can be more effectively suppressed.

The content of the silicone resin contained in each of the first layer 4 and the second layer 5 is not particularly limited and is preferably 20 mass% or greater, and more preferably 30 mass% or greater, and preferably 70 mass% or less, and more preferably 60 mass% or less. When the content of the silicone resin is not less than the lower limit value, the heat resistance and impact resistance of the top plate 1 can be further enhanced. Furthermore, when the content of the silicone resin is not greater than the upper limit value, the mechanical strength of the top plate 1 can be further enhanced.

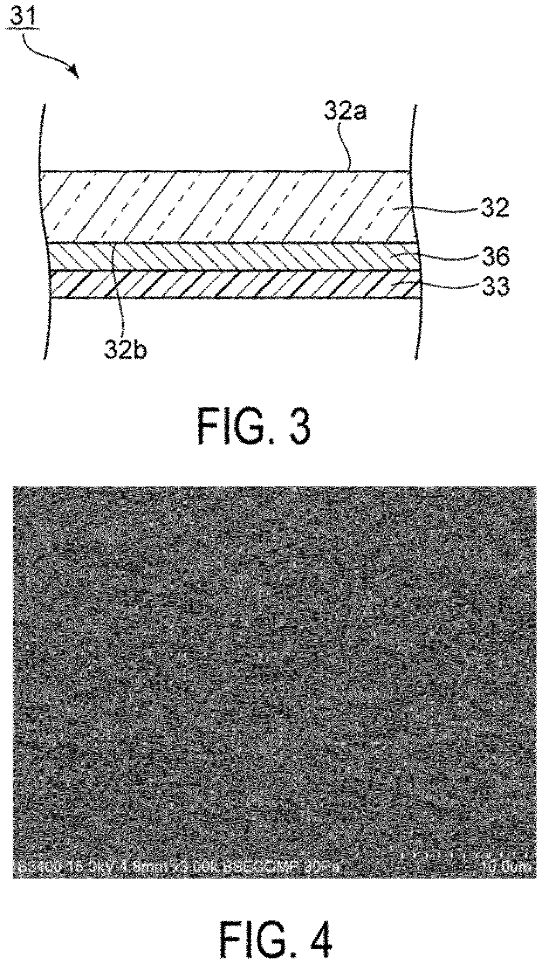

A needle-like crystal pigment is a pigment having a needle-like crystal structure. In the present specification, whether or not a needle-like crystal structure is present can be confirmed by observing the shape by using a scanning electron microscope or a transmission electron microscope. For example, based on a photograph such as FIG. 4, the presence of a needle-like crystal structure can be confirmed.

The dimension of the needle-like crystal pigment is not particularly limited. The length of the needle-like crystal pigment may be, for example, 5 µm or greater and 60 µm or less, and is preferably 8 µm or greater, and more preferably 10 µm or greater, and preferably 40 µm or less, more preferably 30 µm or less, and even more preferably 20 µm or less. The width of the needle-like crystal pigment may be, for example, 0.1 µm or greater and 7 µm or less, and is preferably 0.2 µm or greater, and preferably 5 µm or less, more preferably 2 µm or less, and even more preferably 1 µm or less. Furthermore, the aspect ratio of the needle-like crystal pigment may be, for example, 8 or greater and 100 or less, and is preferably 10 or greater, and more preferably 20 or greater, and preferably 80 or less, more preferably 50 or less, and even more preferably 40 or less. The length, the width, and the aspect ratio of the needle-like crystal pigment may be each an average value of 50 needle-like crystal pigments observed by using a scanning electron microscope. Furthermore, an aspect ratio of a needle-like crystal pigment means a ratio of an average length to an average width (average length/average width) of the needle-like crystal pigment.

The needle-like crystal pigment is not particularly limited, and examples thereof include potassium titanate, calcium silicate, and titanium oxide. Among these, the needle-like crystal pigment is preferably potassium titanate because the scratch resistance of the top plate 1 can be more effectively improved. Note that such needle-like crystal pigments may be used alone or as a combination of one or more types thereof.

The pigment mass concentration of the needle-like crystal pigment contained in each of the first layer 4 and the second layer 5 is not particularly limited and is preferably 3 mass% or greater, and more preferably 10 mass% or greater, and preferably 50 mass% or less, and more preferably 30 mass% or less. When the content of the needle-like crystal pigment is in the range described above, the scratch resistance of the top plate 1 can be more effectively improved. Note that a pigment mass concentration of a needle-like crystal pigment means a content of a needle-like crystal pigment contained in each of the first layer 4 and the second layer 5.

Each of the first layer 4 and the second layer 5 may contain a color pigment. In this case, the first layer 4 may contain a first color pigment, and the second layer 5 may contain a second color pigment that is different from the first color pigment. In this case, a combination of color pigments can be appropriately selected taking design and concealing properties for an inner structure of the cooking device into consideration.

The color pigment is not particularly limited as long as the color pigment is a colored inorganic material. Examples of the color pigments include, but are not limited to, a white pigment powder such as a TiO₂ powder, a ZrO₂ powder and a ZrSiO₄ powder, a blue inorganic pigment powder containing Co, a green inorganic pigment powder containing Co, a Ti-Sb-Cr-based or Ti-Ni-based yellow inorganic pigment powder, a Co-Si-based red inorganic pigment powder, a brown inorganic pigment powder containing Fe, and a black inorganic pigment powder containing Cu.

Specific examples of blue inorganic pigment powder containing Co may include, but are not limited to, a Co-Al or Co-Al-Ti based inorganic pigment powder. Specific examples of Co-Al-based inorganic pigment powder include, but are not limited to, a CoAl₂O₄ powder. Specific examples of Co-Al-Ti-based inorganic pigment powder include, but are not limited to, a CoAl₂O₄-TiO₂-Li₂O powder.

Specific examples of green inorganic pigment powder containing Co include, but are not limited to, a Co-Al-Cr-based or Co-Ni-Ti-Zn-based inorganic pigment powder. Specific examples of Co-Al-Cr-based inorganic pigment powder include, but are not limited to, a Co(Al, Cr)₂O₄ powder. Specific examples of Co-Ni-Ti-Zn-based inorganic pigment powder include, but are not limited to, a (Co, Ni, Zn)₂TiO₄ powder.

Specific examples of brown inorganic pigment powder containing Fe include, but are not limited to, a Fe-Zn-based inorganic pigment powder. Specific examples of Fe-Zn-based inorganic pigment powder include, but are not limited to, a (Zn, Fe)Fe₂O₄ powder.

Specific examples of black inorganic pigment powder containing Cu include, but are not limited to, a Cu-Cr-based inorganic pigment powder and a Cu-Fe-based inorganic pigment powder. Specific examples of Cu-Cr-based inorganic pigment powder include, but are not limited to, a Cu(Cr, Mn)₂O₄ powder and a Cu-Cr-Mn powder. Specific examples of Cu-Fe-based inorganic pigment powder include, but are not limited to, a Cu-Fe-Mn powder.

Such color pigments may be used alone or as a combination of one or more types thereof.

The content of the color pigment contained in each of the first layer 4 and the second layer 5 is preferably 1 mass% or greater, and more preferably 3 mass% or greater, and preferably 60 mass% or less, and more preferably 45 mass% or less. Note that the content of the color pigment contained in each layer is a content relative to the total amount of all materials included in the layer, which corresponds to 100 mass%. When the content of the color pigment contained in each of the layers is not less than the lower limit value, design and concealing properties for an inner structure of the cooking device can be further improved. Furthermore, when the content of the color pigment in each of the layers is not greater than the upper limit value, the heat resistance and impact resistance of the top plate 1 can be further improved.

Each of the first layer 4 and the second layer 5 may further contain a scale-like pigment. For example, mica, talc, or aluminum can be used as the scale-like pigment, and the scale-like pigment is preferably mica or aluminum. Note that, as the aluminum, aluminum obtained by crushing aluminum having a three-dimensional shape, such as a spherical or block form, in one direction can be used. When the first layer 4 and the second layer 5 contain a scale-like pigment, the scratch resistance of the top plate 1 can be more effectively improved. Note that, in the present invention, even when the first layer 4 and the second layer 5 contain a scale-like pigment, needle-like crystal pigments having no orientation are entangled with each other and function as a backbone material and exhibit resistance to shrinking force in the perpendicular direction, and thus occurrence of surface layer peeling of the heat-resistant resin layer 3 can be reliably prevented.

The average particle size of the scale-like pigment is not particularly limited and, for example, may be 3 µm or greater and 50 µm or less, and is preferably 5 µm or greater and preferably 30 µm or less. Note that the average particle size is an average particle size D₅₀ measured by a laser diffraction particle size distribution analyzer.

The content of the scale-like pigment contained in each of the first layer 4 and the second layer 5 is not particularly limited and is preferably 1 mass% or greater, and more preferably 10 mass% or greater, and preferably 40 mass% or less, more preferably 35 mass% or less, even more preferably 30 mass% or less, and particularly preferably 20 mass% or less. When the content of the scale-like pigment is in the range described above, the scratch resistance of the top plate 1 can be more effectively improved. Note that the content of the scale-like pigment is a content relative to the total amount of all materials included in each of the first layer 4 and the second layer 5, which corresponds to 100 mass%.

Furthermore, in the heat-resistant resin layer 3, the mass ratio of the scale-like pigment to the needle-like crystal pigment (scale-like pigment/needle-like crystal pigment) is preferably 10 or less, more preferably 5 or less, even more preferably 4 or less, and particularly preferably 3 or less. When the mass ratio (scale-like pigment/needle-like crystal pigment) is in the range described above, occurrence of surface layer peeling of the heat-resistant resin layer 3 can be prevented, and the scratch resistance of the top plate 1 can be more effectively improved. Note that the lower limit value of the mass ratio (scale-like pigment/needle-like crystal pigment) may be 0.75, for example.

The pigment mass concentration in the heat-resistant resin layer 3 is preferably 3% or greater, and more preferably 10% or greater, and preferably 70% or less, and more preferably 60% or less. When the pigment mass concentration in the heat-resistant resin layer 3 is in the range described above, the scratch resistance of the top plate 1 can be more effectively improved. Note that the pigment mass concentration means a mass proportion of all pigments in each of the first layer 4 and the second layer 5.

The thickness of each of the first layer 4 and the second layer 5 is not particularly limited and is preferably 5 µm or greater, and more preferably 8 µm or greater, and preferably 50 µm or less, and more preferably 30 µm or less. When the thickness of each of the layers is in the range described above, peeling of the heat-resistant resin layer 3 due to repeated heating and cooling can be more effectively prevented, design and concealing properties for an inner structure of the cooking device can be further improved, and the scratch resistance of the top plate 1 can be more effectively improved.

The thickness of the entire heat-resistant resin layer 3 is also not particularly limited and is preferably 5 µm or greater, and more preferably 10 µm or greater, and preferably 70 µm or less, and more preferably 30 µm or less. When the thickness of the entire heat-resistant resin layer 3 is in the range described above, peeling of the heat-resistant resin layer 3 due to repeated heating and cooling can be more reliably prevented, design and concealing properties for an inner structure of the cooking device can be further improved, and the scratch resistance of the top plate 1 can be more effectively improved.

An example of a method for producing the top plate 1 will be described below.

### Production Method

In an example of a method for producing the top plate 1, first, a paste containing a silicone resin precursor and a needle-like crystal pigment is prepared. Note that the paste may contain a crosslinking agent or a curing catalyst. Among these, the paste preferably contains a curing catalyst. Furthermore, the paste may contain a color pigment, a scale-like pigment, a solvent, a viscosity modifier, a leveling agent, a defoaming agent, and the like. Note that, in the present embodiment, a paste for first layer formation and a paste for second layer formation are separately prepared.

The silicone resin precursor is not particularly limited but is preferably a silicone resin precursor having a high heat resistance. For example, the silicone resin precursor is preferably a silicone monomer, silicone oligomer, or silicone resin, in which a functional group directly bonded to a silicon atom is at least one of a methyl group or a phenyl group. In this case, the change of color of the heat-resistant resin layer 3 when the top plate 1 reaches a high temperature can be more effectively suppressed. Among these, a silicone monomer, silicone oligomer, or silicone resin, in which a functional group directly bonded to a silicon atom is a methyl group, is more preferred.

The curing catalyst is not particularly limited and, for example, a metal chelate compound, such as an aluminum chelate compound, a titanium chelate compound, or a zirconia chelate compound, an organic titanium compound, an iron-based metal salt, or a zinc-based metal salt can be used. Among these, a curing catalyst is preferably a metal chelate compound, and more preferably an aluminum chelate compound. In this case, when the top plate 1 is viewed from a cooking surface 2a side, a stain caused by adhesive or the like on a back surface side becomes hard to be visually observed, and the scratch resistance of the heat-resistant resin layer 3 can be further improved. Note that such curing catalysts may be used alone or as a combination of one or more types thereof.

The ratio of the curing catalyst to the silicone resin precursor is not particularly limited and is preferably, in terms of mass ratio of silicone resin precursor:curing catalyst, from 100:0.1 to 100:20, and more preferably from 100:0.2 to 100:10. In a case where the ratio of the curing catalyst to the silicone resin precursor is in the range described above, when the top plate 1 is viewed from a cooking surface 2a side, a stain caused by adhesive or the like on a back surface side becomes hard to be visually observed, and the scratch resistance of the heat-resistant resin layer 3 can be further improved.

Note that, as the needle-like crystal pigment, color pigment, and scale-like pigment, those described in the section of "Heat-Resistant Resin Layer" above can be used as appropriate. Furthermore, the solvent is not particularly limited and, for example, xylene can be used.

Next, the paste for first layer formation is applied on a back surface 2b of the glass substrate 2. Then, the glass substrate 2 on which the paste for first layer formation has been applied is heated to dry the paste for first layer formation and to cure the silicone resin precursor, and thus a first layer 4 is formed. Note that, depending on the composition of the first layer 4, firing may be further performed after drying.

Next, the paste for second layer formation is applied on the first layer 4. Then, the glass substrate 2 on which the paste for second layer formation has been applied on the first layer 4 is heated to dry the paste for second layer formation and to cure the silicone resin precursor, and thus a second layer 5 is formed. By this, a heat-resistant resin layer 3 can be formed. Note that, depending on the composition of the second layer 5, firing may be further performed after drying.

Note that application speed and viscosity of the paste can be appropriately set based on the content of the pigment contained in the heat-resistant resin layer 3. For example, when the content of the pigment in the heat-resistant resin layer 3 is large, the application speed of the paste is preferably set slow by lowering the viscosity of the silicone resin precursor by increasing the amount of the solvent or the like.

The heating temperature of the paste may be, for example, 60°C or higher and 200°C or lower. The heating time may be 1 minute or longer and 30 minutes or shorter.

Furthermore, the firing temperature may be, for example, a temperature that is 200°C or higher and 450°C or lower. The firing time may be, for example, 10 minutes or longer and 1 hour or shorter.

### Second Embodiment

FIG. 2 is a schematic cross-sectional view illustrating a top plate for a cooking device according to a second embodiment of the present invention. As illustrated in FIG. 2, in a top plate 21, a single-layered heat-resistant resin layer 23 is provided on a back surface 22b of a glass substrate 22.

The heat-resistant resin layer 23 contains a silicone resin and a needle-like crystal pigment. As the silicone resin and the needle-like crystal pigment, those described for the first embodiment can be used as appropriate. Furthermore, the heat-resistant resin layer 23 may contain a color pigment and a scale-like pigment similarly to the first embodiment.

The pigment mass concentration of the needle-like crystal pigment contained in the heat-resistant resin layer 23 is not particularly limited and is preferably 3 mass% or greater, and more preferably 10 mass% or greater, and preferably 50 mass% or less, and more preferably 30 mass% or less. When the content of the needle-like crystal pigment is in the range described above, the scratch resistance of the top plate 21 can be more effectively improved. Note that a pigment mass concentration of a needle-like crystal pigment means a content of a needle-like crystal pigment contained in the heat-resistant resin layer 23.

In a case where the heat-resistant resin layer 23 contains a color pigment, the content of the color pigment contained in the heat-resistant resin layer 23 is preferably 1 mass% or greater, and more preferably 3 mass% or greater, and preferably 60 mass% or less, and more preferably 45 mass% or less. Note that the content of the color pigment contained in the heat-resistant resin layer 23 is a content relative to the total amount of all materials included in the heat-resistant resin layer 23, which corresponds to 100 mass%. When the content of the color pigment contained in the heat-resistant resin layer 23 is not less than the lower limit value, design and concealing properties for an inner structure of the cooking device can be further improved. Furthermore, when the content of the color pigment in the heat-resistant resin layer 23 is not greater than the upper limit value, the heat resistance and impact resistance of the top plate 21 can be further improved.

In a case where the heat-resistant resin layer 23 contains a scale-like pigment, the content of the scale-like pigment contained in the heat-resistant resin layer 23 is not particularly limited and is preferably 1 mass% or greater, and more preferably 10 mass% or greater, and preferably 40 mass% or less, more preferably 35 mass% or less, even more preferably 30 mass% or less, and particularly preferably 20 mass% or less. When the content of the scale-like pigment is in the range described above, the scratch resistance of the top plate 21 can be more effectively improved. Note that the content of the scale-like pigment is a content relative to the total amount of all materials included in the heat-resistant resin layer 23, which corresponds to 100 mass%.

Furthermore, in a case where the heat-resistant resin layer 23 contains a scale-like pigment, in the heat-resistant resin layer 23, the mass ratio of the scale-like pigment to the needle-like crystal pigment (scale-like pigment/needle-like crystal pigment) is preferably 10 or less, more preferably 5 or less, even more preferably 4 or less, and particularly preferably 3 or less. When the mass ratio (scale-like pigment/needle-like crystal pigment) is in the range described above, occurrence of surface layer peeling of the heat-resistant resin layer 23 can be prevented, and the scratch resistance of the top plate 21 can be more effectively improved. Note that the lower limit value of the mass ratio (scale-like pigment/needle-like crystal pigment) may be 0.75, for example.

The pigment mass concentration in the heat-resistant resin layer 23 is preferably 3% or greater, and more preferably 10% or greater, and preferably 70% or less, and more preferably 60% or less. When the pigment mass concentration in the heat-resistant resin layer 23 is in the range described above, the scratch resistance of the top plate 21 can be more effectively improved. Note that the pigment mass concentration means a mass proportion of all pigments in the heat-resistant resin layer 23.

The content of the silicone resin contained in the heat-resistant resin layer 23 is not particularly limited and is preferably 20 mass% or greater, and more preferably 30 mass% or greater, and preferably 70 mass% or less, and more preferably 60 mass% or less. When the content of the silicone resin is not less than the lower limit value, the heat resistance and impact resistance of the top plate 21 can be further enhanced. Furthermore, when the content of the silicone resin is not greater than the upper limit value, the scratch resistance of the heat-resistant resin layer 3 can be further enhanced.

The thickness of the heat-resistant resin layer 23 is not particularly limited and is preferably 5 µm or greater, and more preferably 10 µm or greater, and preferably 50 µm or less, and more preferably 30 µm or less. When the thickness of the entire heat-resistant resin layer 23 is in the range described above, peeling of the heat-resistant resin layer 23 due to repeated heating and cooling can be more reliably prevented, design and concealing properties for an inner structure of the cooking device can be further improved, and the scratch resistance of the top plate 21 can be more effectively improved.

The method for forming the heat-resistant resin layer 23 is also not particularly limited, and the formation can be performed by a method similar to that of the first embodiment. Specifically, first, a paste containing a silicone resin precursor and a needle-like crystal pigment is prepared. Note that the paste may contain a curing catalyst or a crosslinking agent. Furthermore, the paste may contain a color pigment, a scale-like pigment, a solvent, a viscosity modifier, a leveling agent, a defoaming agent, and the like. Next, the prepared paste is applied on a back surface 22b of the glass substrate 22. Then, the glass substrate 22 on which the paste has been applied is heated to dry the paste and to cure the silicone resin precursor, and thus a heat-resistant resin layer 23 can be formed. Note that, depending on the composition of the heat-resistant resin layer 23, firing may be performed after drying.

Also, in the top plate 21 of the present embodiment, because the heat-resistant resin layer 23 contains the silicone resin and the needle-like crystal pigment, the scratch resistance can be effectively improved.

Note that, as in the present embodiment, the heat-resistant resin layer 23 may be made of one resin layer. However, the heat-resistant resin layer may be made of two resin layers similarly to the heat-resistant resin layer 3 of the first embodiment, or may be made of three or more resin layers.

### Third Embodiment

FIG. 3 is a schematic cross-sectional view illustrating a top plate for a cooking device according to a third embodiment of the present invention. As illustrated in FIG. 3, in a top plate 31, an inorganic light shielding layer 36 is provided on a back surface 32b of a glass substrate 32. Furthermore, a heat-resistant resin layer 33 is provided on the inorganic light shielding layer 36. Note that, as the heat-resistant resin layer 33, a heat-resistant resin layer same as the heat-resistant resin layer 23 of the second embodiment can be used.

The inorganic light shielding layer 36 is a light shielding layer provided to conceal a structure inside the cooking device and containing the color pigment described above. Thus, even when the color pigment proportion in each layer of the heat-resistant resin layer 33 and the inorganic light shielding layer 36 is reduced, by providing the inorganic light shielding layer 36 together with the heat-resistant resin layer 33, the total content of the pigments in the heat-resistant resin layer 33 and the inorganic light shielding layer 36 can be maintained or increased, and thus the structure inside the cooking device can be effectively concealed when the top plate 31 is viewed from the cooking surface 32a side, and good appearance of the top plate 31 can be further enhanced.

The inorganic light shielding layer 36 is not particularly limited as long as the inorganic light shielding layer 36 is made of an inorganic material and has a low transmittance of visible light. For example, the inorganic light shielding layer 36 may be formed by a layer containing a color pigment and glass. In this case, as the color pigment, for example, a Cu-Cr-Mn-based black inorganic pigment can be used. Furthermore, as the glass, for example, B₂O₃-SiO₂-based glass powder can be used. Note that the inorganic light shielding layer 36 can be also formed by a film of a metal such as titanium.

In the present embodiment, the inorganic light shielding layer 36 is a porous film containing a color pigment and glass. As described above, the inorganic light shielding layer 36 is preferably a porous film but may be a fine film having substantially no gaps. When the inorganic light shielding layer 36 is a fine film, an adhesive is less likely to seep into the glass substrate 32 side and is less likely to stand out as a stain when the top plate 31 is viewed from the cooking surface 32a side.

The thickness of the inorganic light shielding layer 36 is not particularly limited. The thickness of the inorganic light shielding layer 36 can be appropriately set depending on, for example, the light transmittance of the inorganic light shielding layer 36, the mechanical strength, or the thermal expansion coefficient. Note that the inorganic light shielding layer 36 typically has a thermal expansion coefficient that is different from that of the glass substrate 32. Thus, the inorganic light shielding layer 36 may be damaged by repeated heating and cooling.

From the viewpoint of further suppressing the damage, the inorganic light shielding layer 36 is preferably thin. The thickness of the inorganic light shielding layer 36 is preferably 1 µm or greater and 15 µm or less, and more preferably 2 µm or greater and 10 µm or less.

A method for forming the inorganic light shielding layer 36 is not particularly limited. For example, the inorganic light shielding layer 36 may be formed by a method described below.

First, a solvent is added to a mixed powder of a color pigment and a glass powder to form a paste. The obtained paste is applied on a back surface 32b of a glass substrate 32 by using a screen printing method or the like, and is dried. Thereafter, the inorganic light shielding layer 36 can be formed by firing. Note that the firing temperature and the firing time may be set as appropriate depending on composition of the glass powder to be used and the like. The firing temperature may be, for example, approximately from 200°C to 900°C. The firing time may be, for example, approximately from 10 minutes to 1 hour.

Furthermore, when the inorganic light shielding layer 36 is made of a metal film, formation can be performed by a sputtering method or a CVD method.

Also, in the top plate 31 of the present embodiment, because the heat-resistant resin layer 33 contains the silicone resin and the needle-like crystal pigment, the scratch resistance can be effectively improved.

Note that, in the present embodiment, a single-layered heat-resistant resin layer 33 is provided on the inorganic light shielding layer 36; however, two or more heat-resistant resin layers may be provided on the inorganic light shielding layer 36.

Hereinafter, the present invention will be described in more detail based on examples. However, the following examples are merely illustrative. The present invention is not limited to the following examples in any way.

### Example 1

First, a paste was prepared by mixing a methyl phenyl silicone resin (product number "TSR-145", available from Momentive) as a silicone resin precursor, an aluminum chelate compound (product number "CAT-AC", available from Shin-Etsu Chemical Co., Ltd.) as a curing catalyst, a black inorganic pigment powder, potassium titanate (product number "TISMO D", available from Otsuka Chemical Co., Ltd.; length: 15 µm; width: 0.5 µm; aspect ratio: 30) as a needle-like crystal pigment, and xylene as a solvent in a mass ratio (silicone resin precursor:curing catalyst:inorganic pigment powder: needle-like crystal pigment solvent) of 63:1:20:12:4 (pigment mass concentration: 46 mass%).

This paste was screen-printed on an entire transparent crystallized glass plate (product name "N-0", available from Nippon Electric Glass Co., Ltd.; average linear thermal expansion coefficient in from 30°C to 750°C: 0.5 × 10⁻⁷/°C; thickness: 4 mm) as a glass substrate in a manner that the thickness was 15 µm. Thereafter, heating and drying were performed at 300°C for 10 minutes. By this, a single-layered heat-resistant resin layer was formed on the glass substrate, and thus a top plate was obtained.

FIG. 4 is a scanning electron microscope photograph of a cross-section of a heat-resistant resin layer obtained in Example 1. As illustrated in FIG. 4, the needle-like crystal pigment can be confirmed.

### Example 2

A top plate was obtained in the same manner as in Example 1 except for preparing a paste by employing the ratio of silicone resin precursor: curing catalyst color pigment powder:needle-like crystal pigment:solvent to be 52:1:20:18:9 and the pigment mass concentration of 55%.

### Example 3

A top plate was obtained in the same manner as in Example 1 except for using titanium oxide (product number: "FTL-300", available from Ishihara Sangyo Kaisha, Ltd.; length: 8.5 µm; width: 0.3 µm; aspect ratio: 28) as the needle-like crystal pigment.

### Example 4

A top plate was obtained in the same manner as in Example 2 except for using calcium silicate (Ca silicate, product number "nyglos" available from NYCO; length: 40 µm; width: 4 µm; aspect ratio: 10) as the needle-like crystal pigment.

### Example 5

A top plate was obtained in the same manner as in Example 1 except for preparing a paste by mixing a methyl phenyl silicone resin (product number "TSR-145", available from Momentive) as the silicone resin precursor, an aluminum chelate compound (product number "CAT-AC", available from Shin-Etsu Chemical Co., Ltd.) as the curing catalyst, a black inorganic pigment powder, potassium titanate (product number "TISMO D", available from Otsuka Chemical Co., Ltd.; length: 15 µm; width: 0.5 µm; aspect ratio: 30) as the needle-like crystal pigment, mica (average particle size: 24 µm) as a scale-like pigment, and xylene as the solvent in a mass ratio (silicone resin precursor:curing catalyst inorganic pigment powder:needle-like crystal pigment scale-like pigment solvent) of 63:1:20:3:9:4 (pigment mass concentration: 46 mass%; mass ratio (mica/potassium titanate): 9/3).

### Examples 6 to 9

Top plates were obtained in the same manner as in Example 5 except for changing the pigment mass concentrations and the mass ratios (mica/potassium titanate) to those listed in Table 1 and Table 2 below.

### Example 10

A top plate was obtained in the same manner as in Example 5 except for using aluminum (average particle size: 24 µm) as the scale-like pigment.

### Comparative Example 1

A top plate was obtained in the same manner as in Example 1 except for using no needle-like crystal pigment.

### Comparative Example 2

A top plate was obtained in the same manner as in Comparative Example 1 except for using no curing catalyst.

### Comparative Example 3

A top plate was obtained in the same manner as in Example 1 except for using mica (average particle size: 24 µm) as a scale-like pigment in place of the needle-like crystal pigment.

### Comparative Examples 4 to 7

Top plates were obtained in the same manner as in Comparative Example 3 except for preparing pastes by using the scale-like pigment and setting the pigment mass concentrations to those listed in Table 2 below.

### Evaluation

The following evaluations were performed for the top plates obtained in Examples 1 to 10 and Comparative Examples 1 to 7.

### Solvent Resistance

After a surface of the heat-resistant resin layer of the top plate was rubbed back and forth by a rag soaked with a solvent, condition of the surface was visually observed and evaluated based on the following criteria. Note that the test was performed in conditions of a load of 500 g/cm² and the number of rubbing of 10 cycles. Furthermore, hexane and ethanol were each used as a solvent.

### Evaluation Criteria

1: The heat-resistant resin layer was dissolved, and the glass substrate was exposed.
2: The surface of the heat-resistant resin layer was dissolved.
3: Abrasion occurred in the surface of the heat-resistant resin layer, and a part of the surface of the heat-resistant resin layer peeled off.
4: The gloss of the surface of the heat-resistant resin layer changed.
5: No change was observed in the surface of the heat-resistant resin layer.

### Pencil Hardness

The pencil hardness of the heat-resistant resin layer of the top plate was evaluated in accordance with JIS K 5600-5-4 (1999).

### Heat Resistance Test

The conditions of the heat-resistant resin layer after the top plate was heated at 350°C for 3 hours, 27 hours, and 100 hours were visually observed. Note that O in Table 1 and Table 2 indicates no crack or breakage occurred.

### Boiling Water Resistance Test

The top plate was immersed in boiling water at 95°C and taken out 2 hours later, and then appearance of the taken out top plate was observed. Note that O in Table 1 and Table 2 indicates the appearance before the immersion was maintained. Furthermore, color difference ΔE of L*a*b* color space before and after the immersion was measured. The color difference ΔE was evaluated by using a spectrophotometer ("CM600d", available from Konica Minolta). In addition, adhesiveness was evaluated as follows. Eleven lines of cut in length and width directions with 1 mm spacing were formed to form cut with 100 squares on the heat-resistant resin layer after the immersion by using a utility knife. Tape was adhered to this part and peeled off, and a condition caused by the peeling was evaluated. Note that, in Table 1 and Table 2, A indicates that no peeling occurred, B indicates that peeling was observed only on the surface, and C indicates that exposure of the glass substrate was observed.

The results are indicated in Table 1 and Table 2 below. Note that, in Table 1 and Table 2 below, in addition to the concentration of the entire pigment in the heat-resistant resin layer (pigment mass concentration), the content of the needle-like crystal pigment and the content of the scale-like pigment in the heat-resistant resin layer are listed.

**[Table 1]**

| | | Example 1 | Example 2 | Example 3 | Example 4 | Example 5 | Example 6 | Example 7 | Example 8 |
|---|---|---|---|---|---|---|---|---|---|
| Type of pigment other than color pigment | | Potassium titanate | Potassium titanate | Titanium oxide | Ca silicate | Mica/Potassium titanate = 3 | Mica/Potassium titanate = 1 | Mica/Potassium titanate = 3 | Mica/Potassium titanate = 1 |
| Pigment mass concentration | | 46% | 55% | 46% | 55% | 46% | 46% | 48% | 48% |
| Content of needle-like crystal pigment (mass%) | | 17% | 26% | 17% | 26% | 4% | 9% | 4% | 10% |
| Content of scale-like pigment (mass%) | | - | - | - | - | 13% | 9% | 14% | 10% |
| Curing catalyst blended amount | | 1.0% | 1.0% | 1.0% | 1.0% | 1.0% | 1.0% | 1.0% | 1.0% |
| Solvent Resistance | Hexane | 4 | 4 | 4 | 4 | 4 | 4 | 4 | 4 |
| | Ethanol | 4 | 4 | 4 | 4 | 4 | 4 | 4 | 4 |
| Pencil Hardness | | 4H | 4H | 4H | 4H | 5H | 4H-5H | 5H | 5H |
| Heat resistance (350°C) | 3 hours | ○ | ○ | ○ | ○ | ○ | ○ | ○ | ○ |
| | 27 hours | ○ | ○ | ○ | ○ | ○ | ○ | ○ | ○ |
| | 100 hours | ○ | ○ | ○ | ○ | ○ | ○ | ○ | ○ |
| Boiling Water Resistance 95°C × 2 hours | Appearance | ○ | ○ | ○ | ○ | ○ | ○ | ○ | ○ |
| | Color difference ΔE | 0.04 | 0.12 | 0.06 | 0.17 | 0.03 | 0.10 | 0.13 | 0.03 |
| | Adhesiveness | A | A | A | A | A | A | A | A |

**[Table 2]**

| | | Example 9 | Example 10 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Type of pigment other than color pigment | | Mica/ Potassium titanate = 3 | Aluminum/ Potassium titanate = 3 | - | - | Mica | Mica | Mica | Mica | Mica |
| Pigment mass concentration | | 50% | 46% | 46% | 46% | 46% | 50% | 55% | 60% | 65% |
| Content of needle-like crystal pigment (mass%) | | 5% | 4% | - | - | - | - | - | - | - |
| Content of scale-like pigment (mass%) | | 16% | 13% | - | - | 17% | 21% | 26% | 31% | 36% |
| Curing catalyst blended amount | | 1.0% | 1.0% | 1.0% | 0.0% | 1.0% | 1.0% | 1.0% | 1.0% | 1.0% |
| Solvent Resistance | Hexane | 4 | 4 | 4 | 1 | 4 | 4 | 4 | 4 | 4 |
| | Ethanol | 4 | 4 | 4 | 2 | 4 | 4 | 4 | 4 | 4 |
| Pencil Hardness | | 5H | 5H | H | B | 5H | 5H | 6H | 7H | 4H |
| Heat resistance (350°C) | 3 hours | ○ | ○ | Peeling of entire surface | ○ | ○ | ○ | ○ | ○ | ○ |
| | 27 hours | ○ | ○ | - | ○ | ○ | ○ | ○ | ○ | ○ |
| | 100 hours | ○ | ○ | - | ○ | Microcrack | ○ | ○ | ○ | ○ |
| Boiling Water Resistance 95°C × 2 hours | Appearance | ○ | ○ | ○ | ○ | ○ | ○ | ○ | ○ | ○ |
| | Color difference ΔE | 0.04 | 0.03 | 0.15 | 0.12 | 0.04 | 0.10 | 0.26 | 0.16 | 0.17 |
| | Adhesiveness | A | A | A | A | B | B | B | B to C | C |

As is clear from Table 1 and Table 2, in Examples 1 to 10 in which the needle-like crystal pigment was used, the pencil hardness was high and no surface peeling of the heat-resistant resin layer occurred, and thus it was confirmed that the scratch resistance was effectively enhanced. On the other hand, in Comparative Examples 1 and 2 in which no needle-like crystal pigment was used, the pencil hardness was not adequately enhanced. Furthermore, in Comparative Examples 3 to 7 in which the scale-like pigment was used, it was confirmed that the scratch resistance was not adequately enhanced because the surface layer peeling was observed. However, in Examples 5 to 10 in which the needle-like crystal pigment and the scale-like pigment were used in combination, the pencil hardness was high and no surface peeling of the heat-resistant resin layer occurred, and thus it was confirmed that the scratch resistance was effectively enhanced without any reduction in the adhesiveness.

### Reference Signs List

1, 21, 31 Top plate for a cooking device
2, 22, 32 Glass substrate
2a, 22a, 32a Cooking surface
2b, 22b, 32b Back surface
3, 23, 33 Heat-resistant resin layer
4 First layer
5 Second layer
36 Inorganic light shielding layer

## Claims

1. A top plate for a cooking device, the top plate comprising:
a glass substrate including a cooking surface on which a cooking implement is to be placed, and a back surface on an opposite side to the cooking surface; and
a heat-resistant resin layer provided on the back surface of the glass substrate, the heat-resistant resin layer containing a silicone resin and a needle-like crystal pigment.

2. The top plate for a cooking device according to claim 1, wherein the needle-like crystal pigment is at least one selected from the group consisting of potassium titanate, calcium silicate, and titanium oxide.

3. The top plate for a cooking device according to claim 2, wherein the needle-like crystal pigment is potassium titanate.

4. The top plate for a cooking device according to claim 1 or 2, wherein the heat-resistant resin layer further contains a scale-like pigment.

5. The top plate for a cooking device according to claim 4, wherein the scale-like pigment is mica or aluminum.

6. The top plate for a cooking device according to claim 1 or 2, wherein a pigment mass concentration of the needle-like crystal pigment in the heat-resistant resin layer is 3% or greater and 50% or less.

7. The top plate for a cooking device according to claim 1 or 2, wherein
the heat-resistant resin layer comprises:
a first layer containing a first color pigment, and
a second layer provided on the first layer, the second layer containing a second color pigment that is different from the first color pigment; and
at least one of the first layer or the second layer contains the needle-like crystal pigment.

8. The top plate for a cooking device according to claim 7, wherein the second layer contains the needle-like crystal pigment.
